# EUROPÄISCHE PATENTSCHRIFT

(11) **EP 1 008 437 B1**
(45) Veröffentlichungstag und Bekanntmachung des Hinweises auf die Patenterteilung: **08.09.2004**
(21) Anmeldenummer: 99124102.7
(22) Anmeldetag: 02.12.1999
(51) Int. Cl.: B30B 11/24, B29C 47/40, B29C 47/08, F16H 1/22

(54) **Getriebe für einen Doppelschneckenextruder**
Drive for a twin-screw extruder
Transmission pour extrudeuse à deux vis

(30) Priorität: 08.12.1998 DE 19856534
(43) Veröffentlichungstag der Anmeldung: 14.06.2000
(73) Patentinhaber: A. Friedr. Flender AG, 46395 Bocholt (DE)
(72) Erfinder: Thewes, Helmut, 46397 Bocholt (DE)
(74) Vertreter: Radünz, Ingo, Dipl.-Ing.

(56) Entgegenhaltungen:
- DE-A- 3 420 918
- DE-A- 4 129 913
- G. NIEMANN: "Maschinenelemente" 1981 , SPRINGER VERLAG , BELIN XP002132665 2 * Seite 368 * * Seite 389 *

## Beschreibung

Die Erfindung betrifft ein Getriebe für einen Doppelschneckenextruder mit konischen Schneckenwellen mit den Merkmalen des Oberbegriffes des Anspruches 1.

Bei einem derartigen z. B. aus der EP-OS 275 485 bekannten Getriebe sind wegen der Schrägstellung der gegenläufig rotierenden Schneckenwellen und der mit ihnen verbundenen Abtriebswellen die beiden auf den Abtriebswellen angeordneten, miteinander kämmenden und der Leistungsaufteilung dienenden Zahnräder als Kegelzahnräder ausgebildet. Im Vergleich zu Stirnrädern erfordert die Herstellung der Verzahnung von Kegelrädern einen erhöhten Konstruktions- und Fertigungsaufwand. Um einen einwandfreien Eingriff der Schnecken des Extruders zu erreichen, muß die Verzahnung der auf den Abtriebswellen des Getriebes angeordneten Kegelräder exakt berechnet werden. Anderenfalls muß die Verzahnung der Kegelräder unter hohem Aufwand nachgearbeitet werden, da zur Erreichung des Eingriffes der Schnecken ein radiales Verdrehen der Kegelräder auf den Abtriebswellen nicht möglich ist. Diese bei der Verwendung von Kegelrädern auftretenden Schwierigkeiten werden weiter erhöht, wenn zwischen die miteinander kämmenden Kegelräder ein drittes Kegelrad anzuordnen ist, um einen Doppelschneckenextruder anzutreiben, dessen konische Schneckenwellen im Gleichlauf rotieren.

Drehstarre Ausgleich-Kupplungen (Taschenbuch für den Maschinenbau / Dubbel, 14. Aufl. 1981, Seite 409) werden allgemein dort eingesetzt, wo eine winkeltreue Übertragung gefordert wird oder wo Wellen radiale oder winklige Fluchtfehler oder Axialverschiebungen erfahren. Zu den drehstarren Ausgleichs-Kupplungen gehören unter anderen Gelenkwellen und Doppelzahnkupplungen.

Aus der DE-OS 41 29 913 ist ein Doppelschneckenextruder mit parallelen Schneckenwellen bekannt, bei dem das der Leitungsaufteilung dienende Getriebe und ein die Schneckenwellen aufnehmender Verfahrensteil voneinander getrennt sind. Der Antrieb der parallelen Schneckenwellen erfolgt bei diesem Extruder von dem Verzweigungsgetriebe mittels Gelenkwellen. Auf diese Weise soll es ermöglicht werden, das Verzweigungsgetriebe ohne Rücksicht auf den engen Abstand der parallelen Schneckenwellen zu konstruieren.

DE-A-34 20 918 beschreibt einen Doppelschneckenextruder mit zwei konischen Extruderschnecken, wobei mindestens eine Getriebewelle mit der zugehörigen Schneckenwelle durch eine Winkelausgleichskupplung verbunden ist.

Der Erfindung liegt die Aufgabe zugrunde, das gattungsgemäße Getriebe für einen Doppelschneckenextruder mit konischen Schneckenwellen derart zu gestalten, daß der Konstruktions- und Fertigungsaufwand erniedrigt wird und ein Getriebe für einen Doppelschneckenextruder mit konischen, gleichläufig rotierenden Schneckenwellen möglich wird.

Diese Aufgabe wird bei einem gattungsgemäßen Getriebe erfindungsgemäß durch die kennzeichnenden Merkmale des Anspruches 1 gelöst. Vorteilhafte Ausgestaltungen der Erfindung sind Gegenstand der Unteransprüche.

Bei diesem Getriebe sind die Abtriebswellen nicht mehr in die Leistungsverteilung eingeschlossen. Dadurch kann bei einem Doppelschneckenextruder mit konischen Schneckenwellen auf Kegelräder verzichtet und das Verteilgetriebe aus Stirnrädern aufgebaut werden. Diese Stirnräder sind einfacher herzustellen und können in dem Getriebe in einfacher Weise über eine hydraulische Pumpeinrichtung in ihrer gegenseitigen Lage innerhalb des Getriebes eingestellt werden. Da die als Doppelzahnkupplungen ausgebildeten winkelbeweglichen, drehstarren Kupplungen innerhalb des Getriebegehäuses angeordnet sind, baut das Getriebe kompakt. Die Doppelzahnkupplungen sind in einem ohnehin mit Öl gefüllten Raum untergebracht, so daß deren Schmierung unproblematisch ist.

Mehrere Ausführungsbeispiele der Erfindung sind in der Zeichnung dargestellt und werden im folgenden näher erläutert. Es zeigen:
- Fig. 1: den Längsschnitt durch ein Getriebe für einen Doppelschneckenextruder mit konischen Schneckenwellen,
- Fig. 2: den Längsschnitt durch ein Getriebe gemäß einer anderen Ausführungsform,

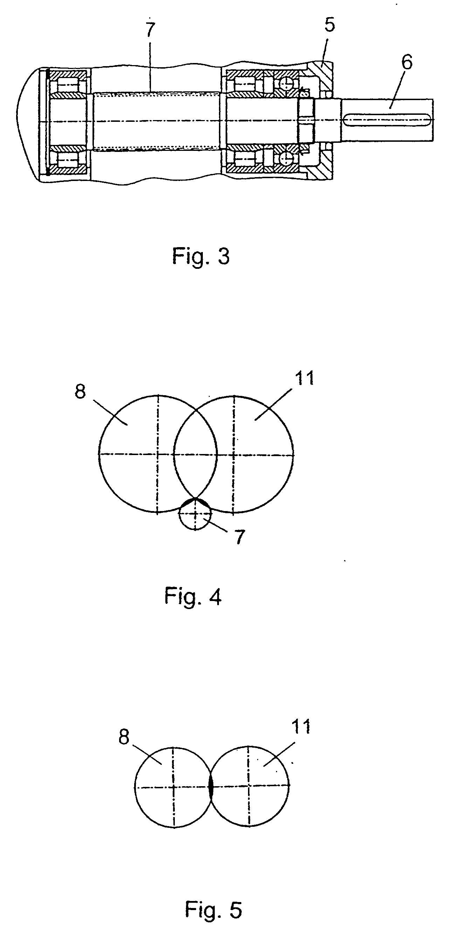

- Fig. 3: durch den Längsschnitt durch die Antriebswelle für ein Getriebe nach Fig. 1,
- Fig. 4: den Räderplan gemäß Schnitt IV - IV nach Fig. 1 und
- Fig. 5: den Räderplan gemäß Schnitt V - V nach Fig. 2.

Das Getriebe dient zum Antrieb eines Doppelschneckenextruders mit zwei konischen, unter einem Winkel zueinander angestellten Schneckenwellen 1. Von diesem Doppelschneckenextruder sind nur die Endabschnitte der beiden Schneckenwellen 1 dargestellt. Diese Endabschnitte sind mit einer Verzahnung versehen und über innenverzahnte Verbindungsmuffen 2 mit jeweils einer Abtriebswelle 3, 4 des Getriebes verbunden sind. Durch diese starre Verbindung sind die Abtriebswellen 3, 4 unter dem gleichen Winkel zueinander angeordnet wie die Schneckenwellen 1.

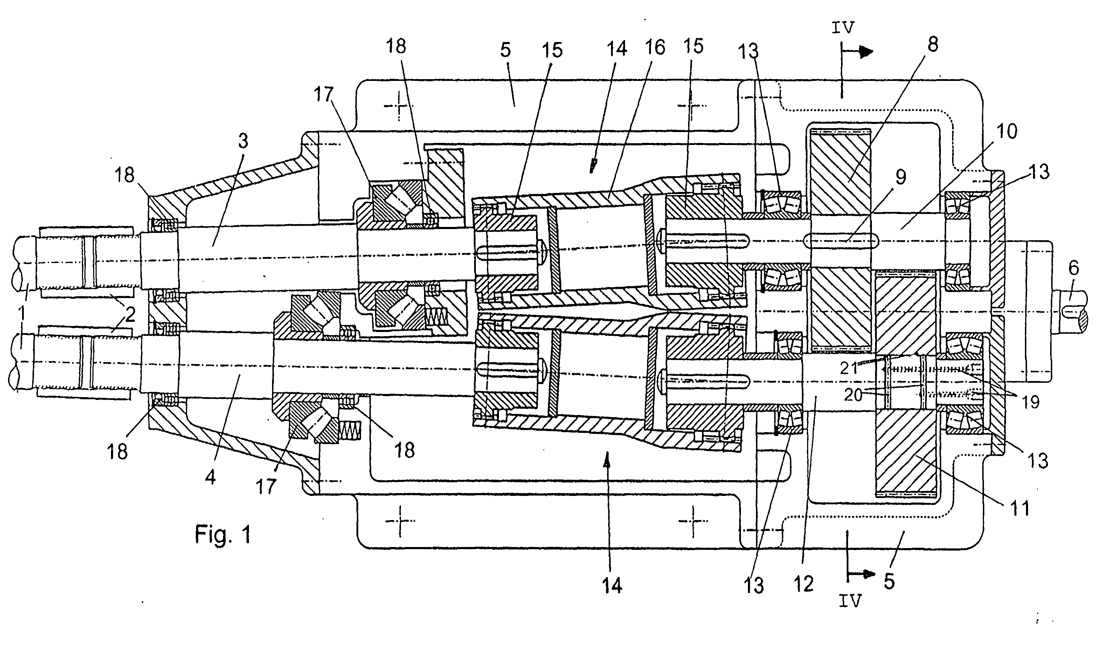

Das Getriebe ist in einem mehrteiligen, mit Öl gefüllten Gehäuse 5 untergebracht. Das Getriebe enthält eine über einen nicht gezeigten Antriebsmotor angetriebene Antriebswelle 6, die aus dem Gehäuse 5 herausgeführt ist. Bei dem in Fig. 1 dargestellten Getriebe ist auf der Antriebswelle 6 drehfest ein Antriebsritzel 7 angeordnet, das mit zwei Zahnrädern 8, 11 kämmt. Das Zahnrad 8 ist über eine Paßfeder 9 auf einer ersten Getriebewelle 10 befestigt. Das Zahnrad 11 ist durch Aufgeschrumpfen drehfest auf einer zweiten Getriebewelle 12 befestigt, die parallel zu der ersten Getriebewelle 10 angeordnet ist. Die genannten Zahnräder 8, 11 und das Ritzel 7 sind als Stirnräder ausgebildet. Sie sind in Lagern 13 in dem Gehäuse 5 gelagert. Durch die gewählte Räderanordnung laufen die beiden Getriebewellen 10, 12 im gleichen Drehsinn um. Über die später beschriebene Verbindung der Getriebewellen 10, 12 mit den Abtriebswellen 3, 4 rotieren auch die Schneckenwellen 1 gleichläufig.

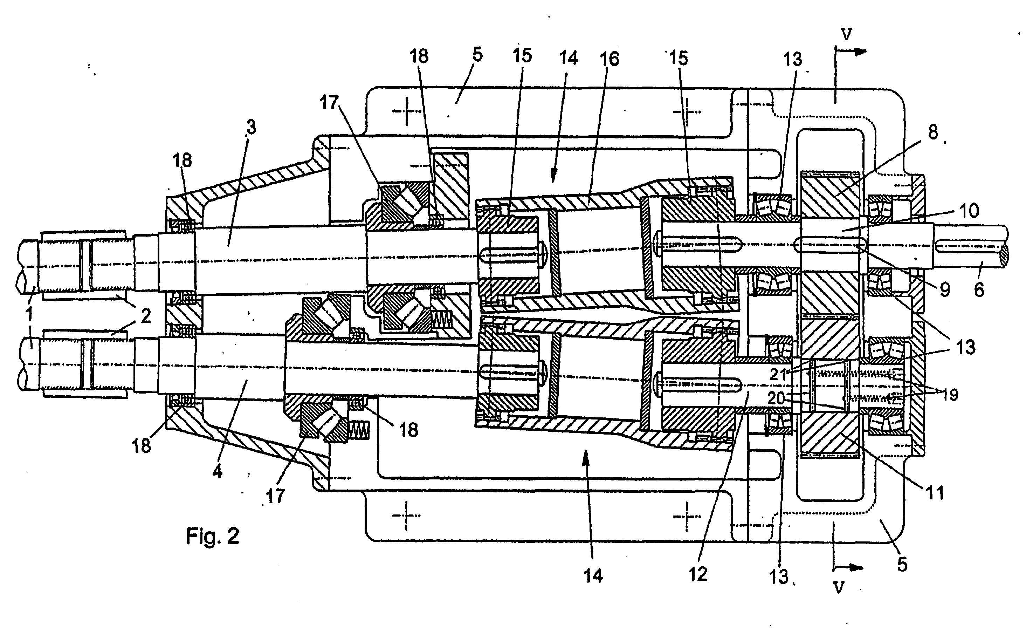

Das in Fig. 2 dargestellte Getriebe unterscheidet sich von dem Getriebe gemäß Fig. 1 lediglich dadurch, daß die erste Getriebewelle 10 mit dem Antriebsmotor gekuppelt ist und damit als Antriebswelle dient. Das auf dieser ersten Getriebewelle 10 angeordnete Zahnrad 8 kämmt mit dem auf der zweiten Getriebewelle 12 angeordneten Zahnrad 11. Die beiden Getriebewellen 10, 12 laufen gegenläufig um, so daß die Schneckenwellen 1 ebenfalls gegenläufig rotieren.

Die beschriebenen Getriebe dienen als Verteilgetriebe, dem ein Untersetzungsgetriebe vorgeschaltet sein kann.

Jede der beiden gleichläufig oder gegenläufig umlaufenden, parallelen Getriebewellen 10, 12 ist mit einer der beiden unter einem Winkel zueinander angeordneten Abtriebswellen 3, 4 drehstarr und winkelbeweglich verbunden. Diese Verbindung erfolgt über Doppelzahnkupplungen 14, die innerhalb des Gehäuses 5 angeordnet sind. Jede Doppelzahnkupplung 14 besteht aus zwei Kupplungshälften 15, die auf den einander zugewandten Enden der Getriebewellen 10, 12 und der Abtriebswellen 3, 4 drehfest befestigt sind. Die Kupplungshälften 15 sind mit einer Außenverzahnung versehen, die bogenförmig ausgebildet ist. In diese Außenverzahnung greift eine Innenverzahnung einer Kupplungshülse 16 ein, die die beiden Kupplungshälften 15 übergreift. Die Schmierung der Doppelzahnkupplungen 14 erfolgt durch das in dem Gehäuse 5 zur Schmierung der Lager vorhandene Öl.

Die Abtriebswellen 3, 4 sind über Axiallager 17 in dem Gehäuse 5 abgestützt und Radiallagern 18 gelagert.

Von der Stirnseite her sind durch die zweite Getriebewelle 12 axiale Bohrungen 19 geführt, die in radiale Bohrungen 20 münden. Die radialen Bohrungen 20 enden in jeweils einer Ringnut 21, die in den Sitz des aufgeschrumpften Zahnrades 11 eingebracht sind. Die Bohrungen 19, 20 sind bei geöffnetem Gehäuse 5 an eine Pumpeinrichtung anschließbar. Diese Pumpeinrichtung gefördert eine unter hohem Druck stehende Hydraulikflüssigkeit durch die Bohrungen 19, 20 in die Ringnut 21 des Schrumpfsitzes auf der zweiten Getriebewelle 12. Dadurch wird das aufgeschrumpfte Zahnrad 11 soweit von der Getriebewelle 12 abgehoben, daß es gegenüber der zweiten Getriebewelle 12 verdreht und radial eingestellt werden kann. Die Abtriebswelle 4 läßt sich jetzt über die Verbindung mit der zweiten Getriebewelle 12 bei in Eingriff gehaltenen Zahnrädern 8, 11 soweit relativ zu dem Zahnrad 11 verdrehen, daß sie eine radiale Stellung einnimmt, bei der die später angekuppelten Schneckenwellen 1 in Eingriff stehen. Bei den beschriebenen Getrieben ist nur das Zahnrad 11 der zweiten Getriebewelle 12 aufgeschrumpft und mit einer Pumpeinrichtung versehen, während das Zahnrad 8 über die Paßfeder 9 auf der ersten Getriebewelle 10 befestigt ist. Es auch möglich, das Zahnrad 8 ebenfalls auf die erste Getriebewelle 10 aufzuschrumpfen und mit einer Pumpeinrichtung zu versehen.

## Patentansprüche

1. Getriebe für einen Doppelschneckenextruder mit konischen Schneckenwellen (1) bestehend aus einem durch eine Antriebswelle (6) angetriebenen Verteilgetriebe und aus zwei Abtriebswellen (3, 4), die unter einem Winkel zueinander angeordnet sind und die an die Schneckenwellen (1) kuppelbar sind, wobei das Verteilgetriebe und die Abtriebswellen (3, 4) in einem gemeinsamen Gehäuse (5) angeordnet sind und innerhalb des Gehäuses (5) zwischen dem Verteilgetriebe und den Abtriebswellen (3, 4) winkelbewegliche, drehstarre Kupplungen angeordnet sind, **dadurch gekennzeichnet, daß** die winkelbeweglichen, drehstarren Kupplungen als Doppelzahnkupplung (14) ausgebildet sind, die eine mit einer Innenverzahnung versehene Kupplungshülse (16) enthält, die zwei mit einer als Bogenverzahnung ausgebildeten Außenverzahnung versehene Kupplungshälften (15) übergreift, die auf den einander zugewandten Enden jeder der beiden Abtriebswellen (3, 4) und der Getriebewellen (10, 12) des Verteilgetriebes drehfest befestigt sind.

2. Getriebe nach Anspruch 1, **dadurch gekennzeichnet, daß** mindestens ein Zahnrad (11) des Verteilgetriebes mit Schrumpfsitz auf die entsprechende Welle aufgeschrumpft und über eine hydraulische Pumpeinrichtung radial einstellbar ist.

3. Getriebe nach einem der Ansprüche 1 bis 2, **dadurch gekennzeichnet, daß** die Abtriebswellen (3, 4) gleichläufig rotieren.

4. Getriebe nach einem der Ansprüche 1 bis 3, **dadurch gekennzeichnet, daß** die Abtriebswellen (3, 4) gegenläufig rotieren.

## Claims

1. Transmission for a twin-screw extruder with conical screw shafts (1), consisting of a power take-off gear driven by a drive shaft (6) and of two driven shafts (3, 4), which are arranged at an angle relative to one another and can be coupled to the screw shafts (1), wherein the power take-off gear and the driven shafts (3, 4) are arranged in a common housing (5) and angularly movable couplings secure against rotation are arranged within the housing (5) between the power take-off gear and the driven shafts (3, 4), **characterised in that** the angularly movable couplings secure against rotation are constructed as a double tooth coupling (14) containing a coupling sleeve (16) which is provided with an internal toothing and which engages over two coupling halves (15), which are provided with an external toothing constructed as a curved toothing and which are fastened in rotationally fixed manner on the mutually facing ends of each of the two driven shafts (3, 4) and the gear shafts (10, 12) of the power take-off gear.

2. Transmission according to claim 1, **characterised in that** at least one gear wheel (11) of the power take-off gear is shrink-fitted on the corresponding shaft by shrunk-on seat and is radially adjustable by way of a hydraulic pump device.

3. Transmission according to one of claims 1 and 2, **characterised in that** the driven shafts (3, 4) rotate in the same sense.

4. Transmission according to one of claims 1 to 3, **characterised in that** the driven shafts (3, 4) rotate in opposite sense.

## Revendications

1. Transmission pour une extrudeuse à deux vis à arbres de vis coniques (1), constituée d'un engrenage répartiteur entraîné par un arbre moteur (6) et de deux arbres de sortie (3, 4), disposés sous un angle l'un par rapport à l'autre et qui peuvent être accouplés aux arbres de vis (1), l'engrenage répartiteur et les arbres de sortie (3, 4) étant disposés dans un carter commun (5) et des accouplements rigides à la torsion mobiles angulairement étant disposés à l'intérieur du carter (5) entre l'engrenage répartiteur et les arbres de sortie (3, 4), **caractérisée en ce que** les accouplements rigides à la torsion mobiles angulairement sont réalisés sous forme d'accouplement à double denture (14), qui comporte un manchon d'accouplement (16) muni d'une denture intérieure recouvrant deux moitiés d'accouplement (15) munies d'une denture extérieure réalisée sous forme de denture en arc, lesquelles moitiés sont immobilisées en rotation sur les extrémités tournées l'une vers l'autre de chacun des deux arbres de sortie (3, 4) et des arbres de transmission (10, 12) de l'engrenage répartiteur.

2. Transmission suivant la revendication 1, **caractérisée en ce qu'**au moins une roue dentée (11) de l'engrenage répartiteur est frettée avec ajustement serré sur l'arbre correspondant et est réglable radialement par l'intermédiaire d'un système de pompe hydraulique.

3. Transmission suivant l'une des revendications 1 à 2, **caractérisée en ce que** les arbres de sortie (3, 4) tournent dans le même sens.

4. Transmission suivant l'une des revendications 1 à 3, **caractérisée en ce que** les arbres de sortie (3, 4) tournent en sens contraire.
